# EUROPEAN PATENT APPLICATION

(11) **EP 0 802 046 A2**
(43) Date of publication of application: **22.10.1997**
(21) Application number: 97302651.1
(22) Date of filing: 18.04.1997
(51) Int. Cl.: B32B 27/32

(54) **Multilayer films having improved inter-layer adhesion**

(30) Priority: 19.04.1996 US 634000
(71) Applicant: W.R. Grace & Co.-Conn., New York, New York 10004 (US)
(72) Inventor: Mueller, Walter B., Inman, SC 29649 (US); Kennedy, Thomas D., Simpsonville, SC 29681 (US); Rivett, Janet, Simpsonville, SC 29680 (US)
(74) Representative: Senior, Alan Murray

(57) **Abstract**

A multilayer film generally includes:
a) a first, exterior layer comprising a polypropylene homopolymer or copolymer; and
b) a second layer in adherence with the first layer, the second layer comprising a homogeneous ethylene/alpha-olefin copolymer having a density of less than or equal to 0.92 grams per cubic centimeter.

Such multilayer film is advantageously used in various food-packaging applications because of its excellent heat-sealability as well as flex-crack and pin-hole resistance.

## Description

### Cross-Reference to Related Application

This application is a continuation-in-part of copending Application Serial No. 08/408,667, filed March 22, 1995. the disclosure of which is hereby incorporated by reference herein.

### Background of the Invention

This invention relates to multilayer films which are capable of being heat-sealed to form a pouch, such as a pouch for the packaging of medical solutions or food products. More particularly, the invention relates to multilayer films having improved inter-layer adhesion, thereby leading to improved heat-sealability and greater flex-crack and pin-hole resistance.

Currently, it is common medical practice to supply medical solutions for parenteral (e.g., intravenous) administration in the form of disposable, flexible pouches. One class of such pouches is commonlv referred to as an "I.V. bag." These pouches must meet a number of performance criteria, including collapsibility, optical clarity and transparency, high-temperature heat-resistance, and sufficient mechanical strength to withstand the rigors of the use environment. Medical solution pouches must also provide a sufficient barrier to the passage of moisture vapor and other gasses to prevent contamination of the solution contained therein.

Solution-containing medical pouches are typically heat-sterilized in an autoclave at about 250°F for periods of 15 to 30 minutes. Steam is generally used as the heat-transfer medium. Thus, medical solution pouches must be able to endure the high temperatures which are encountered during heat-sterilization without deterioration by, e.g., developing a heat-seal leak or other type of containment failure.

Medical solution pouches must also have sufficient mechanical strength to withstand the abuse which is typically encountered in the use environment. For example, in some circumstances, a plastic or rubber bladder is placed around a medical solution-containing pouch and pressurized to, e.g., 300-400 mm/Hg, in order to force the solution out of the pouch an into a patient. Such a bladder is commonly referred to as a "pressure-cuff" and is used, e.g., when a patient is bleeding profusely in order to quickly replace lost fluids or, e.g., when a patient has high blood pressure such that a greater opposing pressure must be generated in the pouch in order to introduce medical solution into the patient's veins. Medical solution pouches should have sufficient durability to remain leak-free during such procedures.

A shortcoming of currently-available multilayer, polyolefin-containing medical pouches is their inability to consistently withstand the application of a pressure-cuff for an extended period of time. In particular, such medical pouches often contain one or more layers of polvpropvlene, e.g., as a heat-seal layer, which are joined to the rest of the film with an adhesive or "tie" layer, typically an anhydride-modified polyethylene homopolymer or copolymer such as ethylene/vinyl acetate copolymer or linear low density polyethylene. It has been determined that such pouches fail prematurely upon the application of a pressure cuff due to poor adhesion between the polypropylene layer(s) and the adhesive layer(s). Because of the poor adhesion, the polypropylene-containing layer(s) are not properly supported and strengthened by the rest of the film. As a result, the polypropylene layer(s) are highly susceptible to being ruptured during the application of a pressure-cuff due to the increased fluid pressure within the pouch. Another consequence of the poor adhesion is that, once the polypropylene-based layer has been ruptured, the medical solution can easily flow out of the pouch between the polypropylene layer and its adjoining tie layer.

It has also been determined that poor adhesion between polypropylene-containing layers and their adjoining tie layers results in various forms of containment failures in multilayer films, and particularly in coextruded multilayer films, used to form food-packaging pouches and other packaging enclosures. In this regard, two primary types of failure mechanisms have been identified, both of which are triggered by tensile and flexure stressing which typical food packaging applications impart on flexible packaging films. The first type is similar to the failure mechanism described above in connection with medical solution pouches, and occurs as a result of the propagation of a stress fracture or other imperfection in the film in the area of a heat-seal. When included in multilayer packaging films, a relatively high modulus material such as polypropylene could potentially prevent such fractures from further propagating into a leak. However, due to the poor adhesion between polypropylene and traditional tie-layer materials, the fracture can continue to propagate between the polypropylene-containing layer and the adjoining tie layer until the end of the pouch's heat-seal is reached, whereby an opening is formed through which the pouch contents can egress from and/or air can ingress into the pouch interior. When this occurs, both the pouch and its contents must be discarded.

A second type of failure mechanism associated with poor adhesion between polypropylene and traditional tie-layer materials is the development of cracks and/or pin-holes in the film due to the flexure thereof during food-packaging operations. This problem is particularly prominent in vertical and horizontal 'form-fill-seal' packaging operations whereby a multilayer film web is continuously formed into a pouch, filled with a food product, and then heat-sealed closed. The inventors have found that the use of a polypropylene-containing layer in the multilayer film used in such operations improves the film's resistance to flex-crack/pin-hole development, but only if the polypropylene can be adequately bonded to the rest of the film structure.

Accordingly, a need exists in the art for a multilayer, polypropylene-containing film which has improved inter-layer adhesion between the polypropylene-containing layer(s) and the rest of the film structure, particularly in coextruded, multilayer films.

### Summary of the Invention

That need is met by the present invention which provides a multilayer film, comprising:
a) a first layer comprising a blend of homopolymer or copolymer of polypropylene and elastomer; and
b) a second layer in adherence with the first layer, the second layer comprising a homogeneous ethylene/alpha-olefin copolymer having a density of less than or equal about 0.89 grams per cubic centimeter.

The first layer preferably comprises a propylene/ethylene copolymer having from about 2 to about 10 percent by weight ethylene and, more preferably, from about 4 to about 6 percent ethylene.

The elastomer may be selected from the group consisting of styrene-ethylene-butylene-styrene block copolymer, styrene-butadienestyrene block copolymer, styrene-isoprene-styrene block copolymer, ethylene-propylene rubber, and ethylene-propylene-diene terpolymer. Preferably, the elastomer is present in the first layer at a weight percentage ranging from about 5 to about 50 and, more preferably, from about 10 to about 40.

The foregoing multilayer film of the present invention is particularly useful as a material from which flexible pouches for the packaging and administration of medical solutions can be formed. As such, the first layer preferably functions as a heat-seal layer and forms the inside surface of the pouch. The second layer preferably serves to bond the first, heat-seal layer to additional layers which provide properties which are desirable when the multilayer film of the present invention is to be used to form a medical solution pouch.

Such additional layers preferably include: a third, core layer in adherence with the second, adhesive layer; a fourth, adhesive layer in adherence with the third, core layer; and a fifth, heat/abuse-resistant layer in adherence with fourth, adhesive layer.

When used to form medical solution pouches, the aforedescribed multilayer film has been found to provide much better resistance to leakage upon the application of a pressure-cuff than previous multilayer, polyolefin-based films. Such improved resistance to leakage is believed to result from the excellent adhesion between the first, heat-seal layer and the second, adhesive layer. The inventor has surprisingly found that an adhesive layer comprising a homogeneous ethylene/alpha-olefin copolymer having a density of 0.89 g/cc or less adheres very well to a heat seal layer comprising a blend of a homopolymer or copolymer of polypropylene and an elastomer. Good adhesion between such layers was unexpected because of their dissimilarities, the adhesive layer being primarily polyethylene and the heat-seal layer being primarily polypropylene. Such unexpectedly good adhesion is believed to be the reason for the dramatically improved pressure-cuff performance of medical solution pouches of the present invention verses conventional medical solution pouches wherein the adhesive layer joining the heat-seal and core layers comprises a blend of the components from which the heat-seal and core layers are formed.

Different requirements have been identified when the films of the present invention are used in food packaging applications. Thus, in accordance with another aspect of the invention, a multilayer film which is well-suited for food packaging comprises:
a) a first, exterior layer comprising a polypropylene homopolymer or copolymer; and
b) a second layer in adherence with the first layer, the second layer comprising a homogeneous ethylene/alpha-olefin copolymer having a density of less than or equal to 0.92 grams per cubic centimeter.
Preferably, the density of the homogeneous ethylene/alpha-olefin copolymer ranges from about 0.85 to about 0.91 grams per cubic centimeter and, more preferably, from about 0.89 to about 0.91 grams per cubic centimeter. Most preferably, the multilayer film is coextruded.

Various embodiments of the multilayer film are possible for food packaging applications. For example, the film can be a two-layer film, in which case the second layer serves as an exterior, heat-seal layer while the first layer serves as an exterior, abuse- and heat-resistant layer.

Alternatively, the film can have three or more layers, in which case the second layer is an interior layer and at least a third, exterior layer is included to function as a heat-seal layer. In this manner, the second layer is positioned between the first and third layers. The third layer preferably comprises a polyethylene homopolymer or copolymer, but if desired can comprise polypropylene homopolymer or copolymer (in which case it would preferably be bonded to the rest of the film with a homogeneous ethylene alpha-olefin copolymer). In one version of this alternative embodiment, the third layer is directly adhered to the second layer such that the film is a three-layer film.

In another version, additional layers are included between the second and third layers. For example, the first and second layers can essentially be repeated as fourth and fifth layers which are directly adhered to one another, with the fourth layer being adhered to the second layer and the fifth layer being adhered either to additional layers (such as additional repeated pairings of the first and second layers as, e.g., sixth and seventh layers) or to the third layer to make a five-layer film. Alternatively or in addition, an oxygen-barrier layer, such as a material selected from the group consisting of ethylene/vinyl alcohol copolymer, vinylidene chloride copolymer, polyamide, polyvinyl alcohol, polyhydroxyaminoether, and polyalkylene carbonate, may be included as an interior layer which is positioned between the second and third layers.

In accordance with yet another aspect of the present invention, a multilayer film is as described immediately above, except that one or more additional layers are attached to the first layer comprising polypropylene homopolymer or copolymer. In this embodiment, the first layer is not an exterior layer but is, instead, an interior layer. Such additional layers may be added to impart certain properties to the multilayer film. For example, it may be desirable to increase the stiffness, high-temperature resistance, or abuse-resistance of the film by including as an exterior layer at least one material selected from the group consisting of polyamide, polypropylene, polyester, cellophane, polycarbonate, polyvinylidene fluoride, and blends thereof. The first layer is thus positioned between the second, interior layer and the additional exterior layer. Such additional, exterior layer is preferably oriented in at least one direction, and more preferably biaxially oriented, and is laminated to the first, polypropylene-containing layer with a suitable adhesive.

The foregoing multilayer films in accordance with the present invention provide excellent inter-layer adhesion between the first, polypropylene-containing layer and the rest of the film structure due to the surprisingly good adhesion between the polypropylene-containing layer and the second layer comprising homogeneous ethylene/alphaolefin copolymer. This is particularly advantageous when such layers are coextruded. Thus, improved heat sealability as well as improved flex-crack and pin-hole resistance are obtained in a coextruded film without having to laminate additional layers to the coextruded film to obtain such improvements. As such, the films are ideally suited for various food packaging applications such as, e.g., for fresh or frozen meat or vertical or horizontal form-fill-seal operations.

### Definitions

As used herein, the terms "film," "multilayer film," and the like refer to a thermoplastic material, generally in sheet or web form, having one or more layers of polymeric materials which may be bonded together by any suitable means well known in the art.

As used herein, the phrase "interior layer" refers to any layer of a multilayer film having both of its principal surfaces directly adhered to another layer of the film.

As used herein, the phrase "exterior layer" refers to any layer of a multilayer film having only one of its principal surfaces directly adhered to another layer of the film. A multilayer film has two exterior layers, each of which has two principal surfaces. One principal surface is adhered to another layer of the film. The other principal surface forms one of the two principal exterior surfaces of the film.

As used herein, the terms "polymer," "polymeric," and the like, unless specifically defined, generally include homopolymers, copolymers, terpolymers, and blends and modifications thereof.

As used herein, the term "homopolymer" is used with reference to a polymer resulting from the polymerization of a single monomer, i.e., a polymer consisting essentially of a single type of repeating unit.

As used herein, the term "copolymer" refers to polymers formed by the copolymerization reaction of at least two different co-reactants, e.g., comonomers, and is inclusive of all types of copolymers, such as random, block, segmented, graft, etc.

As used herein, terms identifying polymers, such as "polypropylene," "polyethylene," "polyamide," "polyester," etc., are inclusive of not only polymers comprising repeating units derived from monomers known to polymerize to form a polymer of the named type, but are also inclusive of comonomers, derivatives, etc., which can copolymerize with monomers known to polymerize to produce the named polymer. Derivatives also include ionomers of the polymer(s), such as, e.g., metal salts of copolymers of ethylene and methacrylic acid. As another example, the term "polyamide" encompasses both polymers comprising repeating units derived front monomers, such as caprolactam, which polymerize to form a polyamide, as well as copolymers derived from the copolymerization of caprolactam with a comonomer which when polymerized alone does not result in the formation of a polyamide. Furthermore, terms identifying polymers are also inclusive of "blends" of such polymers with other polymers of a different type.

As used herein, the term "ethylene/alpha-olefin copolymer" generally designates copolymers of ethylene with one or more comonomers selected from C₃ to C₂₀ alpha-olefins, such as 1-butene, 1-pentene, 1-hexene, 1-octene, methyl pentene and the like, in which the polymer molecules comprise long chains with relatively few side chain branches. These polymers are obtained by low pressure polymerization processes and the side branching which is present will be short compared to non-linear polyethylenes (e.g., LDPE, a low density polyethylene homopolymer). Ethylene/alpha-olefin copolymers generally have a density in the range of from about 0.85 g/cc to about 0.96 g/cc. The term linear low density polyethylene (LLDPE) is generally understood to include that group of ethylene/alpha-olefin copolymers which fall into the density range of about 0.915 to about 0.94 g/cc. Sometimes linear polyethylene in the density range from about 0.926 to about 0.94 is referred to as linear medium density polyethylene (LMDPE). Lower density ethylene/alpha-olefin copolymers may be referred to as very low density polyethylene (VLDPE, typically used to refer to the ethylene/ butene copolymers available from Union Carbide with a density ranging from about 0.88 to about 0.91 g/cc ) and ultra-low density polyethylene (ULDPE, typically used to refer to the ethylene/octene copolymers supplied by Dow).

The phrase "ethylene/alpha-olefin copolymers" also includes homogeneous polymers such as metallocene-catalyzed EXACT™ linear homogeneous ethylene/alpha-olefin copolymer resins obtainable from the Exxon Chemical Company, of Baytown, Texas; TAFMER™ linear homogeneous ethylene/alpha-olefin copolymer resins obtainable from the Mitsui Petrochemical Corporation; and long-chain branched, metallocene-catalyzed homogeneous ethylene/alpha-olefin copolymers available from The Dow Chemical Company, known as AFFINITY™ resins. The phrase "homogeneous polymer" refers to polymerization reaction products of relatively narrow molecular weight distribution and relatively narrow composition distribution. Homogeneous polymers are structurally different from heterogeneous polymers (e.g., ULDPE, VLDPE, LLDPE, and LMDPE) in that homogeneous polymers exhibit a relatively even sequencing of comonomers within a chain, a mirroring of sequence distribution in all chains, and a similarity of length of all chains, i.e., a narrower molecular weight distribution. Furthermore, homogeneous polymers are typically prepared using metallocene, or other single-site type catalysts, rather than using Ziegler-Natta catalysts. Such single-site catalysts typically have only one type of catalytic site, which is believed to be the basis for the homgeniety of the polymers resulting from the polymerization.

A homogeneous ethylene/alpha-olefin copolymer can, in general, be prepared by the copolymerization of ethylene and any one or more alpha-olefin. Preferably, the alpha-olefin is a C₃-C₂₀ alpha-monoolefin, more preferably, a C₄-C₁₂ alpha-monoolefin, still more preferably, a C₄-C₈ alpha-monoolefin. Still more preferably, the alpha-olefin comprises at least one member selected from the group consisting of 1-butene, 1-pentene, 1-hexene, and 1-octene. Processes for preparing and using homogeneous polymers are disclosed in U.S. Patent Nos. 5,206,075, 5,241,031, 5,272,236, and 5,278,272; and in PCT International Publication Nos. WO 90/03414 and 93/03093, all of which are hereby incorporated by reference herein in their respective entireties.

As used herein, the term "olefin" generally refers to any one of a class of monounsaturated, aliphatic hydrocarbons of the general formula CₙH₂ₙ, such as ethylene, propylene, and butene. The term may also include aliphatics containing more than one double bond in the molecule such as a diolefin or diene, e.g., butadiene.

As used herein, the term "polyolefin" refers to olefin polymers and copolymers, especially ethylene and propylene polymers and copolymers, and to polymeric materials having at least one olefinic comonomer, such as ethylene vinyl acetate copolymer and ionomer. Polyolefins can be linear, branched, cyclic, aliphatic, aromatic, substituted, or unsubstituted. Included in the term polyolefin are homopolymers of olefin, copolymers of olefin. copolymers of an olefin and a non-olefinic comonomer copolymerizable with the olefin, such as vinyl monomers, modified polymers of the foregoing, and the like. Modified polyolefins include modified polymers prepared by copolymerizing the homopolymer of the olefin or copolymer thereof with an unsaturated carboxylic acid, e.g., maleic acid, fumaric acid or the like, or a derivative thereof such as the anhydride, ester metal salt or the like. It could also be obtained by incorporating into the olefin homopolymer or copolymer, an unsaturated carboxylic acid, e.g., maleic acid, fumaric acid or the like, or a derivative thereof such as the anhydride, ester metal salt or the like.

As used herein, the term "oriented" refers to a polymer-containing material which has been stretched at an elevated temperature (the orientation temperature), followed by being "set" in the stretched configuration by cooling the material while substantially retaining the stretched dimensions. A material can be stretched in one direction (uniaxial orientation), two directions (biaxial orientation), or multiple directions. Biaxial orientation typically occurs in two directions which are perpendicular to one another, such as the longitudinal direction and the transverse direction.

As used herein, the phrase "anhydride-modified" polymer refers to one or more of the following: (1) polymers obtained by copolymerizing an anhydride-containing monomer with a second, different monomer, (2) anhydride-grafted copolymers, and (3) a mixture of a polymer and an anhydride-containing compound.

### Brief Description of the Drawings

Fig. 1 is a schematic cross-section of a five-layer film in accordance with the present invention which is particularly well-suited for medical-solution packaging;
Fig. 2 is a schematic cross-section of a three-layer film in accordance with the present invention which is particularlv well-suited for food packaging;
Fig. 3 is a schematic cross-section of a five-layer film in accordance with the present invention which is particularly well-suited for food packaging;
Fig. 4 is a schematic cross-section of a seven-layer film in accordance with the present invention which is particularly well-suited for food packaging; and
Fig. 5 is a schematic cross-section of the three-layer film shown in Fig. 2 to which additional layers have been laminated in accordance with the present invention.

### Detailed Description of the Preferred Embodiments

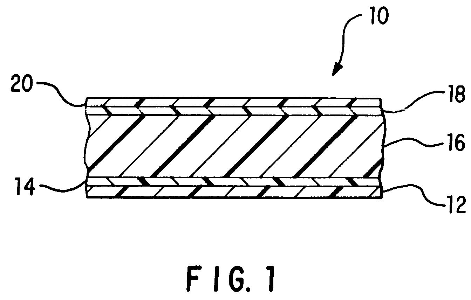

Fig. 1 shows a five-layer film 10 in accordance with the present invention which is suitable for forming a flexible pouch to package and administer medical solutions. Examples of medical solutions which are packaged and administered in this manner include saline solutions, dextrose solutions, and solutions for dialysis applications.

When film 10 is formed into a medical solution pouch, first, heat-seal layer 12 will form the inside surface of the pouch, i.e., the surface which is in contact with the packaged medical solution. The primary function of layer 12 is to form a heat-seal when the film 10 is folded upon itself or mated with another film such that two regions of layer 12 are brought into contact with one another and sufficient heat is applied to predetermined segments of the contacting regions of layer 12 that the heated segments become molten and intermix with one another. Upon cooling, the heated segments of layer 12 become a single, essentially inseparable layer. In this manner, the heated segments of layer 12 produce a liquid-tight closure which is commonlv referred to as a heat-seal. The heat-seals thus formed are generally fin-shaped and are linked together to define the peripheral boundaries of the pouch so that a medical solution can be fully enclosed therein.

The material from which the heat-seal layer is formed must be able to maintain a liquid-tight heat-seal in a wide variety of severe conditions which are typically encountered by a medical solution pouch. During heat-sterilization, for example, medical solution pouches are exposed to high temperatures (e.g., 250°F) for periods of 15 to 30 minutes. Thus, the heat-seal material must have sufficient heat-resistance to maintain a seal under such conditions. In addition, the heat-seal material must have sufficient creep-resistance to maintain a heat-seal when the pouch is placed in a pressure-cuff. Without sufficient creep-resistance, the relatively high fluid pressure of the medical solution inside the pouch would force the heat-seal apart. Additionally, the heat-seal material must have sufficient impact-resistance to maintain a seal when the solution-containing pouch is dropped or otherwise handled roughly.

The foregoing criteria are satisfied by the first, heat-seal layer 12 of the present invention which comprises a blend of homopolymer or copolymer of polypropylene and elastomer. The polypropylene has been found to impart good heat-resistance to layer 12 while the elastomer provides creep- and impact-resistance thereto. When the elastomer is blended with polypropylene such that the weight percentage of elastomer ranges from about 5 to about 50 (based on the total weight of layer 12), excellent heat-seals can be produced. The best heat-seals are obtained when the elastomer is present at a weight percentage ranging from about 10 to 40 and, most preferably, from about 10 to 30. Such heat-seals are consistently able to withstand all of the aforementioned severe conditions typically encountered by medical solution pouches, i.e., heat-sterilization, pressure-cuff application, and general rough handling.

The homopolymer or copolymer of polypropylene is preferablv a propylene/ethylene copolymer having from about 2 to about 10 percent by weight ethylene and, more preferably, from about 4 to about 6 percent ethylene. A suitable propylene/ethylene copolymer is commercially available from the Fina Oil & Chemical Company under the tradename Z9450, and has an ethylene content of about 6 weight percent. Other commercially available propylene/ethylene copolymers include, e.g., PLTD 665 from Exxon. The polypropylene used in layer 12 may be of any of the available types, i.e., isotactic, syndiotactic, and, less preferably, atactic.

The elastomer may be selected from the group consisting of styrene-ethylene-butylene-styrene block copolymer (SEBS), styrenebutadiene-styrene block copolymer (SBS), styrene-isoprene-styrene block copolymer (SIS), ethylene-propylene rubber (EPM), and ethylene-propylene-diene terpolymer (EPDM). SEBS is commercially available, e.g., from the Shell Chemical Co. as Kraton G-1650, G-1652, and G-1657X. SBS is commercially available, e.g., from Shell as Kraton D-1101, D-1102, D-1300C, D-4122, D-4141, D-4455X, and D-4460X. SIS is commercially available, e.g., from Shell as Kraton D-1107, D-1111, D-1112, and D-1117. EPM is commercially available, e.g., from Exxon as Vistalon 719 or 503. EPDM is commercially available, e.g., from Exxon as Vistalon 3708.

Suitable, pre-prepared blends of polypropylene and elastomer are also commercially available. For example, Z-4650 from Horizon Polymers is a blend of 80 percent by weight Z9450 (propylene/ethylene copolymer as described above) and 20 percent by weight Kraton G-1652 (SEBS as described above).

Second, adhesive layer 14 is in adherence with first, heat-seal layer 12. As discussed above, this layer has been found to play a critical role in the performance of a medical solution pouch when a pressure-cuff is applied thereto. That is, insufficient adherence between this layer and heat-seal layer 12 has been found to be a key reason for the failure (i.e., leakage) of medical solution pouches during the application of a pressure-cuff. The inventor has discovered that when layer 14 comprises a homogeneous ethylene/alpha-olefin copolymer having a density of less than or equal to about 0.89 grams per cubic centimeter, excellent adhesion is attained between this layer and heat-seal layer 12. As a result, the pressure-cuff performance of medical solution pouches made from the multilayer films of the present invention is markedly superior to that of pouches made from conventional multilayer films. That is, the time period during which a medical solution pouch can be maintained in a pressure-cuff without failing has been dramatically increased by the multilayer films of the present invention.

More preferably, the density of the homogeneous ethylene/alphaolefin copolymer is less than about 0.88 g/cc. The inventors have found that the adhesive force between a layer containing homogeneous ethylene/alpha-olefin copolymer and a layer containing polypropylene increases with a decrease in the density of the homogeneous ethylene/alpha-olefin copolymer. In view of the severe conditions to which medical solution pouches are exposed (i.e., heat-sterilization, high internal pressure at the heat-seal when a pressure-cuff is applied, etc.), a high degree of adhesion between such layers, i.e., layers 12 and 14, is preferred. Currently, the lowest densities available for ethylene/alphaolefins are around 0.86 g/cc. If lower-density ethylene/alpha-olefins become available in the future, these would be included within the scope of the present invention. Preferred alpha-olefin comonomers include 1-butene, 1-pentene, 1-hexene, and 1-octene.

Preferred ethylene/alpha-olefin copolymers with densities of 0.89 g/cc or less are those which are homogeneous, e.g., metallocene-catalyzed Such copolymers are commercially available from resin manufacturers such as The Dow Chemical Company and the Exxon Chemical Company. An exemplary ethylene/alpha-olefin copolymer is ENGAGE™ EG 8150, an ethylene/octene copolymer commercially available from Dow. This material has a density of 0.868 g/cc (ASTM D-792), a melt index of 0.5 dg/min. (ASTM D-1238), and 25% octene (ASTM D-2238, Method B). Other suitable ethylene/alpha-olefin copolymers from Dow include ENGAGE™ EG 8100, an ethylene/octene copolymer having a density of 0.87 g/cc (ASTM D-792), a melt index of 1 dg/min. (ASTM D-1238), and 24% octene (ASTM D-2238, Method B); and ENGAGE™ EG 8200, an ethylene/octene copolymer having a density of 0.87 g/cc (ASTM D-792), a melt index of 5 dg/min. (ASTM D-1238), and 24% octene (ASTM D-2238, Method B).

Third, core layer 16 preferably imparts flexibility to multilayer film 10, as well as strength and gas impermeability. Any material which provides a desired level of flexibility, strength, and gas impermeability to film 10 and which adheres well to adhesive layer 14 may be used to form layer 16. In this regard, layer 16 preferably comprises a material selected from the group consisting of very low density polyethylene, linear low density polyethylene, ethylene/vinyl acetate copolymer, ethylene/methyl acrylate-copolymer, high density polyethylene, a homogeneous ethylene/alpha-olefin copolymer, and blends of the foregoing materials. Each of the foregoing materials are widely available. Preferably, third, core layer 16 comprises a homogeneous ethylene/alpha-olefin copolymer or a blend of homogeneous ethylene/alpha-olefin copolymers. Such copolymers have been found to result in a medical solution pouch with improved optical properties after the pouch has been heat-sterilized. The homogeneous ethylene/alphaolefin copolymer or blend of copolymers preferably has a density ranging from about 0.89 to about 0.92 grams per cubic centimeter and, more preferably, from about 0.90 to about 0.91 g/cc. Preferably, the melt-flow index (ASTM D-1238) of the homogeneous ethylene/alpha-olefin copolymer or blend of copolymers is less than 20, more preferably less than 10, even more preferably less than 2.2, and, most preferably, between 0. and 1.5.

Fourth, adhesive layer 18 may comprise a material which is conventionally used to form a tie-layer, such as a material selected from the group consisting of anhydride-modified ethylene/vinyl acetate copolymer, anhydride-modified ethylene/methyl acrylate copolymer, anhydride-modified ethylene/ethyl acrylate copolymer, anhydride-modified linear low density polyethylene, and anhydride-modified very low density polyethylene. The particular choice of material for layer 18 will depend upon the materials selected for layers 16 and 20.

When multilayer film 10 is formed into a medical solution pouch, fifth, heat/abuse-resistant layer 20 forms the outside surface of the pouch. The primary functions of layer 20 are to provide heat-resistance to the pouch during heat-sealing and heat-sterilization, and to provide abuse-resistance from external handling and abrasion. Layer 20 preferably comprises a material selected from the group consisting of polyamide, copolyamide, and copolyester. Suitable polyamides and copolyamides include nylon 66, nylon 610, nylon 12 and copolymers thereof, nylon 11 and copolymers thereof, amorphous nylon, and blends of the foregoing polyamides and copolyamides. A preferred copolyamide is nylon 66/610. Such a material is commercially available from EMS-American Grilon, Inc. under the designation XE 3303. Suitable copolyesters are commercially available from Eastman Chemical Products, Inc. under the tradenames ECDEL™ 9965, 9966, and 9967.

Multilayer film 10 preferably has a total thickness ranging from about 3 to 14 mils (1 mil = 0.001 inch = 0.0254 mm), preferably 5 to 10 mils, and most preferably 6.5 to 9.5 mils. Layers 12 and 20 may range in thickness from about 0.5 to about 8 mils, but preferably are about 0.75 mil in thickness. Layers 14 and 18 may range in thickness from about 0. to about 0.75 mil, but preferably are about 0.4 mil in thickness. Layer 16 may range in thickness from about 1 to about 9 mils, but preferably is about 5.2 mils in thickness.

As can be appreciated by those having ordinary skill in this art, the multilayer films of the present invention are not limited to the five-layer structure described above. Films having a fewer number of layers or a greater number of layers than that shown are included within the scope of the present invention. For example, additional layers, such as high density polyethylene, may be included in the film in order to increase the moisture barrier capabilities of the film if desired. Additional oxygen barrier layers may also be included if desired.

The multilayer films of the present invention have been described in connection with a pouch for the packaging of medical solutions. However, it is to be understood that other embodiments of the invention are also envisioned. That is, first, heat-seal layer 12 and second, adhesive layer 14 may be joined to different layers with different functional properties than those described in order to form films having other uses.

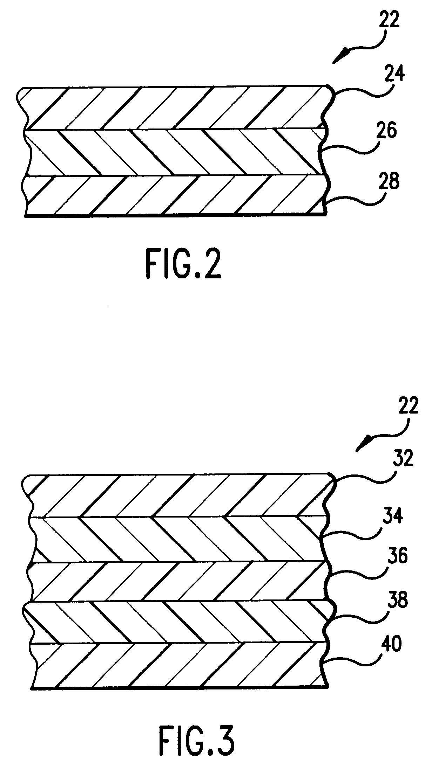

Other embodiments of the multilayer films in accordance with the present invention are illustrated in Figs. 2-5. Such films are particularly useful for packaging applications in which the relatively rigorous conditions of heat-sterilization and/or the application of a pressure-cuff are not typically encountered, e.g., packaging for food, medical devices, household items, industrial products, etc. Thus, the structure of the films used for food- packaging will be somewhat different than the structure of films used in medical applications. For example, the heat-seal layer of films used for food-packaging does not need to possess the degree of heat- and creep- resistance as described above for medical film 10. Thus, the heat-seal layers of food-packaging films in accordance with the present invention do not necessarily need to comprise polypropylene and elastomer. Rather, a heat-seal layer comprising a polyethylene homopolymer or copolymer is suitable for most food-packaging applications. In addition, while it is desirable that the homogeneous ethylene/alpha-olefin layer (14) joining the polypropylene-containing layer (12) to the rest of the film have a density of 0.89 g/cc or less for medical applications, the homogeneous ethylene/alpha-olefin layer joining the polypropylene-containing layer to the rest of the film for food-packaging preferably has a density of 0.92 g/cc or less and, more preferably, a density which ranges from about 0.85 to about 0.91 g/cc. For food packaging applications, such higher densities are preferred over the lower densities used in films for medical solution packaging.

Referring now to Fig. 2, there is shown a three-layer film 22 in accordance with the present invention. Film 22 includes a first, exterior layer 24 comprising a polypropylene homopolymer or copolymer, a second, interior layer 26 in adherence with first layer 24 and comprising a homogeneous ethylene/alpha-olefin copolymer having a density of less than or equal to 0.92 grams per cubic centimeter, and a third, exterior layer 28 in adherence with second layer 26. Alternatively, film 22 can be a two-layer film which includes layers 24 and 26 only, with layer 26 serving as the heat-seal layer. Film 22 preferably has a thickness ranging from about 1 to 10 mils.

Exterior layer 28, which preferably comprises a polyethylene homopolymer or copolymer, provides heat-sealability to the film to facilitate its being formed into a container. When film 22 is made into a container, layer 28 is thus on the inside surface of the container and is in contact with the packaged product. Such container can be a pouch for, e.g., cheese, vegetables, liquid foods such as soup, etc. The pouch can he formed by conventional vertical or horizontal form-fill-seal techniques by continuously folding a web of film 22 upon itself with layer 28 on the inside, heat-sealing where necessary to form an open pouch, severing the pouch from the web and filling it with a food product, and then heat-sealing the opening of the pouch to form a closed container with the food product packaged inside. Preferably, the heat-seals formed will be fin-type heat seals with layer 28 being sealed to itself as opposed to, e.g., lap-type heat-seals where layer 28 would be sealed to layer 24. Alternatively, the container can be a package for a meat product such as, e.g., fresh or frozen beef, poultry, pork, etc. Such a package may be formed using conventional methods by, e.g., mating a pre-cut section of film 22 with another section of film which is the same or different from film 22, and then heat-sealing around the periphery of the resultant structure to form a package. One or both of the films may be thermoformed prior to heat-sealing to form a pocket in which the meat product may be placed. Each of the foregoing packaging techniques are well known in the art of packaging.

Layer 28 may be formed from any material which is heat-sealable, such as polyethylene homopolymer (e.g., low density polyethylene) or copolymer. Non-limiting examples of preferred polyethylene copolymers include homogeneous ethylene/alpha-olefin copolymers; heterogeneous ethylene/alpha-olefin copolymers such as LLDPE, VLDPE, etc.; ionomers; and ethylene/unsaturated ester copolymers such as ethylene/vinyl acetate and ethylene/methyl acrylate copolymers. Such materials are readily and commercially available.

When film 22 is formed into a container, exterior layer 24 forms the outer surface of the container. The primary functions of layer 24 are to provide overall strength to the container, e.g., by stopping the propagation of a tear in the area of a heat-seal; to impart heat-resistance to the container, particularly during heat-sealing so that the heat-sealing mechanism does not melt or burn through the film; and to protect the package from abuse, such as abrasion or puncturing, during packaging operations and when being handled thereafter. Polypropylene homopolymer or copolymer, such as propylene/ethylene copolymer, is ideally suited to provide each of the foregoing functions when film 22 is used in typical food-packaging applications such as those described above. Suitable polypropylenes are readily available from a number of commercial sources.

Polypropylene has also unexpectedly been found to provide film 22, as well as the other films described hereinbelow, with a high degree of resistance to the formation of pin-holes or cracks, commonly referred to as "flex-cracks," which can otherwise occur when films are subjected to the rigors of packaging operations. However, as noted above, polypropylene has further been found to be largely ineffective in protecting the film from flex-crack/pin-hole development, as well as preventing tearing and leakage in the area of the heat-seals, when the polypropylene-containing layer is not well adhered to the rest of the film structure.

In accordance with the present invention, the polypropylene-containing layer is very well adhered to the rest of the film structure by employing an adhesive layer comprising a homogeneous ethylene/alphaolefin copolymer having a density of less than or equal to 0.92 grams per cubic centimeter. As a result, the multilayer films of the invention exhibit excellent resistance to flex-crack/pin-hole development and have strong heat seals. As shown in Fig. 2, layer 26, which comprises a homogeneous ethylene/alpha-olefin copolymer having a density of less than or equal to 0.92 grams per cubic centimeter, bonds polypropylene-containing layer 24 to heat-seal layer 28. Preferably, the density of the homogeneous ethylene/alpha-olefin copolymer ranges from about 0.85 to about 0.91 grams per cubic centimeter and, more preferably, from about 0.89 to about 0.91 grams per cubic centimeter. If desired, second layer 26 can comprise one or more other materials blended with the homogeneous ethylene/alpha-olefin copolymer. Preferably, however, the second layer consists essentially of homogeneous ethylene/alpha-olefin copolymer.

Suitable homogeneous ethylene/alpha-olefin copolymers from which layer 26 may be formed include any of those which have described hereinabove. Specific examples include the following from the Exxon Chemical Company: EXACT™ 4011 with a melt index of approximately 2.2 dg/min (ASTM D-1238(E)), a density of approximately 0.89 g/cc (ASTM D-1505), and a DSC peak melting point of approximately 70°C (Exxon Method); EXACT™ 3030 with a melt index of approximately 2.2 dg/min (ASTM D-1238(E)), a density of approximately 0.91 g/cc (ASTM D-792), and a DSC peak melting point of approximately 101°C (Exxon Method); and Exact™ 3037 with a melt index of approximately 2.2 dg/min (ASTM D-1238(E)), a density of approximately 0.90 g/cc (ASTM D-792), and a DSC peak melting point of approximately 95°C (Exxon Method). Other suitable homogeneous ethylene/alpha-olefin copolymers include AFFINITY™ resins from the Dow Chemical Co., such as PL 1850 or PL 1880.

Referring now to Fig. 3, a five-layer film 30 in accordance with the present invention will be described. Film 30 is similar to film 22 in that first, exterior layer 32 corresponds to first, exterior layer 24 as described above; second, interior layer 34 corresponds to second, interior layer 26 as described above; and third, exterior layer 40 corresponds to third, exterior layer 28 as described above. Film 30 differs from film 22 in that additional interior layers 36 and 38 are present. Fourth, interior layer 36, in adherence with second layer 34, comprises a polypropylene homopolymer or copolymer which may or may not have the same composition as first layer 32. Fifth, interior layer 38, in adherence with fourth layer 36, comprises a homogeneous ethylene/alpha-olefin copolymer having a density of less than or equal to 0.92 grams per cubic centimeter and may or may not have the same composition as second layer 34. If desired, additional interior layers having the same or similar composition as layers 36 and 38 may be included between layers 38 and 40. Film 30 preferably has a thickness ranging from about 2 to 15 mils.

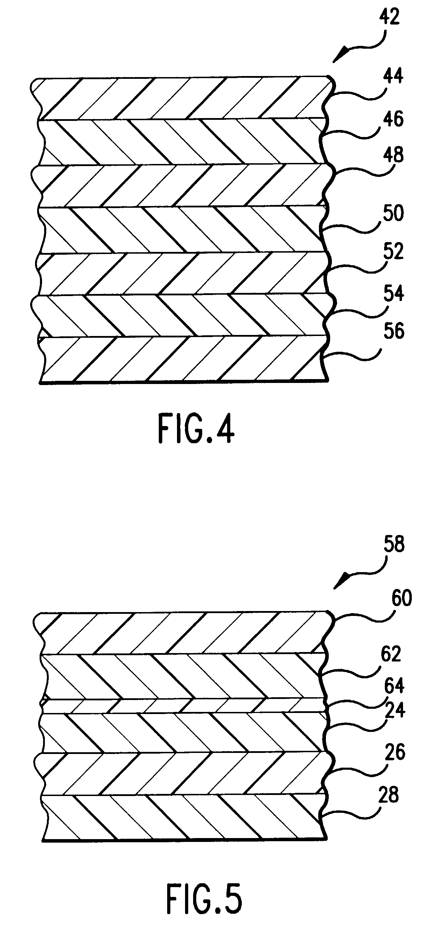

Referring now to Fig. 4, seven-layer film 42 in accordance with the present invention will be described. Film 42 is similar to film 22 in that first, exterior layer 44 corresponds to first, exterior layer 24; second, interior layer 46 corresponds to second, interior layer 26; and third, exterior layer 56 corresponds to third, exterior layer 28. Film 42 differs from film 22 in that additional interior layers 48, 50, 52, and 54 are present. Interior layer 50 is formed from a material which provides a barrier to the passage of oxygen through the film, such as a material selected from the group consisting of ethylene/vinyl alcohol copolymer, vinylidene chloride copolymer, polyamide, polyvinyl alcohol, polyhydroxyaminoether, and polyalkylene carbonate. A preferred material is ethylene/vinyl alcohol copolymer.

Layers 48 and 52 are tie layers and are preferably formed from a material which has the ability to bond layer 50 to the rest of the film structure. Layers 48 and 52 may comprise a material which is conventionally used to form a tie-layer, such as a material selected from the group consisting of anhydride-modified ethylene/vinyl acetate copolymer, anhydride-modified ethylene/methyl acrylate copolymer, anhydride-modified ethylene/ethyl acrylate copolymer, anhydride-modified linear low density polyethylene, and anhydride-modified very low density polyethylene. The particular choice of material for layers 48 and 52 will depend upon the materials selected for layers 50, 46, and 54. For example, when layer 50 comprises ethylene/vinyl alcohol copolymer and layers 46 and 54 comprise homogeneous ethylene/alpha-olefin copolymer, layers 48 and 52 preferably comprise either anhydride-modified ethylene/vinyl acetate copolymer or anhydride-modified linear low density polyethylene.

Layer 54 is an optional layer which is preferably included to balance the structure of film 42. Layer 54 may be formed from any desired material but is preferably formed from an ethylene homopolymer or copolymer. More preferably, layer 54 is formed from a homogeneous ethylene/alpha-olefin copolymer.

Now referring to Fig. 5, a further embodiment of the invention will be described. Film 58 is similar to film 22 as described above, except that two additional layers are attached to the first layer 24 comprising polypropylene homopolymer or copolymer. Multilayer films 30 and 42 can be similarly modified by attaching similar additional layers to layers 32 and 44, respectively. In this embodiment, first layer 24 is not an exterior layer but is, instead, an interior layer. Exterior layer 60 is added to increase the stiffness, high-temperature resistance, and/or abuse-resistance of the film. Exterior layer 60 is preferably formed from at least one material selected from the group consisting of polyamide, polypropylene, polyester, cellophane, polycarbonate, polyvinylidene fluoride, and blends thereof.

Preferably, layer 60 is oriented in at least one direction and, more preferably, biaxially oriented. Most preferably, layer 60 comprises biaxially oriented nylon, biaxially oriented polypropylene, or biaxially oriented polyethylene terephthalate.

Oxygen-barrier functionality can be imparted to the film by including an oxygen-barrier layer 62 positioned between layers 24 and 60. Suitable oxygen-barrier materials include, e.g., ethylene/vinyl alcohol copolymer, vinylidene chloride copolymer (saran), polyamide, polyvinyl alcohol, polyhydroxyaminoether, and polyalkylene carbonate. Two-layer films are commercially-available which combine a biaxially-oriented polymer layer with a layer of an oxygen-barrier material. Examples include saran-coated polyethylene terephthalate which is commercially available from DuPont under the tradename 50M-44 Mylar™ and also available from SPC Films under the tradename KEG Polyester Film.

Film 58 can be formed by first coextruding layers 24, 26, and 28, and then attaching layers 60 and 62 to layer 24, e.g., by lamination with a suitable adhesive 64. Suitable adhesives include urethane adhesives, acrylic adhesives, or ethylene/vinyl acetate. An adhesive layer may or may not be needed to join layers 60 and 62. Such layers may be joined by any suitable technique, including lamination, coextrusion, etc.

Alternatively, layers 62 and/or 60 may be coextruded with layers 24, 26, and 28 by employing a homogeneous ethylene/alpha-olefin copolymer as the material from which layer 64 is formed. In this manner, film 58 would be coextruded as a six-layer film.

The foregoing discussion of preferred film structures as shown in Figs. 2-5 is intended to be illustrative only and not limiting in scope. Other film structures containing additional layers, fewer layers, or different layers are also within the scope of the invention.

Various additives may be used in any or all of the layers of the multiiayer film of the present invention. Such additives include, without limitation, antiblocking agents, antioxidants, processing aids such as calcium stearate, pigments, antistatic agents, lubricants, etc. Where the multilayer film is to be used to for making medical solution pouches, the amount of additive included in the film is preferably kept to a minimum in order to minimize the likelihood that such additives will be extracted into the medical solution during heat-sterilization.

The multilayer films of the present invention are preferably formed by cast coextrusion or a hot blown process as a tubular or flat film. Containers for medical applications, food packaging, or other end uses can be made directly from the coextruded, tubular film, or alternatively from rollstock material obtained from the tube after it has been slit and ply-separated. Other processes, such as extrusion coating, conventional lamination, slot die extrusion, etc., can also be used to make the multilayer film of the present invention. Combinations of the foregoing methods may also be employed. For example, two or more groups of film layers of the film can be formed separately by, e.g., cast coextrusion, and those groups can later be joined by, e.g., adhesive lamination.

If desired, multilayer films in accordance with the present invention may be cross-linked. Cross-linking is preferably done by irradiation, i.e., bombarding the film with particulate or non-particulate radiation such as high-energy electrons from an accelerator or cobalt-60 gamma rays, to cross-link the materials of the film. For medical applications, a preferred irradiation dosage level is in the range of from about 2 megarads (M.R.) to about 8 M.R. Any conventional cross-linking technique may be used. For example, electronic cross-linking may be carried out by curtain-beam irradiation. Chemical cross-linking techniques may also be employed, e.g., by the use of peroxides or silanes.

Pouches made by the multilayer films of the present invention may be sealed by various means well known in the art, including impulse and hot-bar sealing. An example of a commercially available impulse-type sealing device is a Vertrod™ heat sealer.

The invention may be further understood by reference to the following examples, which are provided for the purpose of representation, and are not to be construed as limiting the scope of the invention.

### EXAMPLES

The materials used in the examples are identified below:
"PEC-1": ESCORENE (TM) PD9012.E1; a propylene/ethylene copolymer having an ethylene content of about 2.8 weight percent, a density of about 0.90 g/cc (ASTM D-1505), and a melt index of 6; obtained from the Exxon Chemical Company of Baytown, Texas.
"PEC-2": ESCORENE (TM) PP 9122; a propylene/ethylene copolymer having a density of about 0.90 g/cc (ASTM D-1505) and a melt index of 2.1; obtained from the Exxon Chemical Company of Baytown, Texas.
'PP": ESCORENE (TM) PP3445; a polypropylene homopolymer having a density of about 0.906 g/cc and a melt index of about 36; obtained from the Exxon Chemical Company of Baytown, Texas.
"EAO-1": EXACT 3027 (TM); a homogeneous ethylene/butene copolymer having a density of 0.90 g/cc (ASTM D-792) and a melt index of 3.5 dg/min. (ASTM D-1238); obtained from the Exxon Chemical Company of Baytown, Texas.
"EAO-2": ECD401A (TM); a homogeneous ethylene/alpha-olefin copolymer having a density of 0.92 g/cc (ASTM D-792) and a melt index of 4.9 dg/min. (ASTM D-1238); obtained from the Exxon Chemical Company of Baytown, Texas.
"EAO-3": AFFINITY (TM) PF 1140; a homogeneous ethylene/octene-1 copolymer having 14% octene, a density of 0.90 g/cc, and a melt index of 1.6 dg/min.; obtained from the Dow Chemical Company of Midland, Ml.
"EAO-4": AFFINITY (TM) PL 1880; a homogeneous ethylene/octene-1 copolymer having 12% octene, a density of 0.90 g/cc, and a melt index of 1.0 dg/min.; obtained from the Dow Chemical Company of Midland, Ml.
"LLDPE": LD200.48; a linear low density polyethylene having a density of about 0.92 g/cc and a melt index of about 7.5; obtained from the Exxon Chemical Company of Baytown, Texas.
"LDPE": PE 1042CS15; a low density polyethylene having a density of about 0.92 g/cc and a melt index of about 2.0; obtained from the Rexene Company.
"ADH": A polyurethane adhesive.
"BOPP": AET 75B523; biaxially-oriented polypropylene film having a thickness of 0.75 mil; obtained from AET Packaging Films.
"TIE-1": TYMOR (TM) 1203; an anhydride-grafted linear low density polyethylene tie material having a density of 0.91 g/cc and a melt index of 1.6; obtained from Morton International.
"TIE-2": PLEXAR (TM) PX TR040; an anhydride-grafted ethylene/vinyl acetate tie material having 8.5% vinyl acetate and a melt index of 2.0; obtained from Quantum Chemicals.
"TIE-3": PLEXAR (TM) 107; an anhydride-grafted polyolefin in ethylene/vinyl acetate having a melt index of 3.2; obtained from Quantum Chemicals.
"EVOH": SOARNOL (TM) ET; an ethylene/vinyl alcohol copolymer having 38% ethylene, a density of 1.17 g/cc, and a melt index of about 2.8; obtained from Nippon Gohsei.
"PET-1": MELINEX (TM) 800; a polyethylene terephthalate film having a thickness of 0.48 mil; obtained from ICI.
"PET-2": 50M-44 MYLAR (TM); a saran-coated polyethylene terephthalate film having a thickness of 0.56 mil; obtained from DuPont.

### Example 1

A multilayer film in accordance with the present invention had the following eight-layer structure:
Layer 1 (heat-seal): 82% EAO-1 + 15% EAO-2 + 3% slip agent (10% of total film thickness)
Layer 2: 90% EAO-2 + 10% LLDPE (23% of total film thickness)
Layer 3: EAO-1 (7% of total film thickness)
Layer 4: PEC-1 (13% of total film thickness)
Layer 5: EAO-1 (7% of total film thickness)
Layer 6: PEC-1 (13% of total film thickness)
Layer 7: EAO-1 (15% of total film thickness)
Layer 8 (heat/abuse-resistant): PP (12% of total film thickness)

The film was cast-coextruded and had a total thickness of 5 mils.

### Example 2

A multilayer film in accordance with the present invention had the following four-layer structure:
Layer 1 (heat-seal): EAO-1
Layer 2: PEC-2
Layer 3: ADH
Layer 4 (heat/abuse-resistant): BOPP

The film was prepared by first coextruding layers 1 and 2 as a blown two-layer film having a thickness of about 3 mils wherein layer 1 comprised 65% of the total film thickness and layer 2 comprised 35% of total film thickness. Layer 4 was then laminated to layer 2 via adhesive layer 3.

### Example 3

Packages for frozen red meat is made with the films of Examples 1 and 2 by thermoforming the film of Example 1 into trays, placing pieces of frozen red meat onto the trays, and heat-sealing similarly-sized pieces of the film of Example 2 to the trays. The heat-seal was effected by bringing the heat-seal layer of the film of Example 1 into contact with the heat-seal layer of the film of Example 2, aligning the two films, and applying sufficient heat, pressure, and vacuum to the periphery of the films to bond the films together, thereby forming an enclosure for the frozen meat. The packaging operation was performed on a Multivac® R 7000 vacuum packaging machine.

### Example 4

A multilayer film in accordance with the present invention had the following nine-layer structure:
Layer 1 (heat-seal): 97% EAO-3 + 3% slip agent (35% of total coextruded film thickness)
Layer 2: EAO-3 (10% of total coextruded film thickness)
Layer 3: TIE-1 (8% of total coextruded film thickness)
Layer 4: EVOH (10% of total coextruded film thickness)
Layer 5: TIE-1 (7% of total coextruded film thickness)
Layer 6: EAO-3 (10% of total coextruded film thickness)
Layer 7: PEC-2 (20% of total coextruded film thickness)
Layer 8: ADH
Layer 9 (heat/abuse-resistant): PET- 1

The film was prepared by first coextruding layers 1 - 7 as a blown seven-layer film having a thickness of about 2.5 mils. Layer 9 was then laminated to layer 7 via adhesive layer 8.

### Example 5

The film of Example 4 is used to make packages for shredded cheese on a Hayssen Ultima II vertical form-fill-seal machine.

### Example 6

A multilayer film in accordance with the present invention had the following four-layer structure:
Layer 1 (heat-seal): EAO-1
Layer 2: PEC-2
Layer 3: ADH
Layer 4 (heat/abuse-resistant): BOPP

The film was prepared by first coextruding layers 1 - 2 as a blown two-layer film. Layer 4 was then laminated to layer 2 via adhesive layer 3.

### Example 7

A multilayer film in accordance with the present invention had the following four-layer structure:
Layer 1 (heat-seal): EAO-1
Layer 2: PEC-2
Layer 3: ADH
Layer 4 (heat/abuse-resistant): PET-2

The film was prepared by first coextruding layers 1 - 2 as a blown two-layer film. Layer 4 was then laminated to layer 2 via adhesive layer 3.

### Example 8

A coextruded, multilayer film in accordance with the present invention had the following structure:
Layer 1 (heat-seal): EAO-3
Layer 2: EAO-4
Layer 3: TIE-2
Layer 4: EVOH
Layer 5: TIE-2
Layer 6: EAO-4
Layer 7 (heat/abuse-resistant): PEC-2

### Example 9

A coextruded, multilayer film in accordance with the present invention had the following structure:
Layer 1 (heat-seal): EAO-3
Layer 2: EAO-4
Layer 3: TIE-1
Layer 4: EVOH
Layer 5: TIE-1
Layer 6: EAO-4
Layer 7 (heat/abuse-resistant): PEC-2

### Example 10 (Comparative)

A coextruded, multilayer film had the following structure:
Layer 1 (heat-seal): EAO-1
Layer 2: TIE-3
Layer 3: TIE-1
Layer 4: EVOH
Layer 5: TIE-1
Layer 6: TIE-3
Layer 7 (heat/abuse-resistant): LDPE

### Example 11

The films from Examples 6-10 were tested for flex-crack/pin-hole resistance in accordance with ASTM F392-74 (Condition B, 900 cycles) by wrapping an 8.5 inch x 11 inch film sample around two disks spaced 8.5 inches apart to make a the film sample into cylinder. One disk is continuously rotated 440° relative to the other disk and is continuously moved 5 inches towards the other disk and then back to its starting position. These rotational/translational cycles were repeated 900 times for each film sample. Testing took place at about 35°F. The film samples were then measured to determine the number of flex-cracks/pin-holes which developed.

Table 1 provides a summary of the results of the flex-crack/pin-hole resistance test, where each reported value is the average number of flex-cracks/pin-holes which were present in five tested film samples of each of the films made in accordance with Examples 6-10.

**TABLE 1**

| **FILM** | **NUMBER OF FLEX-CRACKS/PIN-HOLES** |
|---|---|
| Example 6 | 0 |
| Example 7 | 3.2 |
| Example 8 | 0.2 |
| Example 9 | 0.2 |
| Example 10 (Comparative) | 34 |

As a footnote, laminate films were made by adhesively laminating films prepared in accordance with Examples 8-10 to a layer of biaxially oriented PET. These films were then subjected to the flex-crack/pin-hole resistance test described above. For reasons which are not fully understood, the flex-crack/pin-hole performance of laminate films of Examples 8 and 9 worsened in comparison to their non-laminated counterparts (an average of 7.6 and 6.4 pin-holes, respectively), while the performance of laminate films of Comparative Film 10 improved relative to its non-laminated counterpart (an average of 11 pin-holes).

Nevertheless, the results set forth in Table 1 illustrate that the films of the present invention (Examples 6-9) exhibit superior flex-crack/pin-hole resistance. Such superior performance occurs as a result of the excellent adhesion between the polypropylene-containing abuse/heat resistant layer to the rest of the coextruded film structure due to the unexpectedly high degree of bonding between the polypropylene-containing layer and the adjacent layer of homogeneous ethylene alpha-olefin copolymer.

While the invention has been described with reference to illustrative examples, those skilled in the art will understand that various modifications may be made to the invention as described without departing from the scope of the claims which follow.

## Claims

1. A multilayer film, comprising:
a) a first, exterior layer comprising a polypropylene homopolymer or copolymer; and
b) a second layer in adherence with said first layer, said second layer comprising a homogeneous ethylene/alpha-olefin copolymer having a density of less than or equal to 0.92 grams per cubic centimetre.

2. The multilayer film of claim 1, wherein the density of said homogeneous ethylene/alpha-olefin copolymer is from 0.85 to 0.91 grams per cubic centimetre.

3. The multilayer film of claim 2, wherein the density of said homogeneous ethylene/alpha-olefin copolymer is from 0.89 to 0.91 grams per cubic centimetre.

4. The multilayer film of claim 1, 2 or 3 wherein said second layer consists essentially of a homogenous ethylene/alpha-olefin copolymer having a density of less than or equal to 0.92 grams per cubic centimetre.

5. The multilayer film of any one of the preceding claims, wherein said second layer is an interior layer and said multilayer film further includes a third, exterior layer such that said second layer is positioned between said first and third layers, said third layer comprising a polyethylene homopolymer or copolymer.

6. The multilayer film of claim 5, wherein said third layer is directly adhered to said second layer.

7. The multilayer film of claim 5 or 6, further including:
a) a fourth, interior layer in adherence with said second layer, said fourth layer comprising a polypropylene homopolymer or copolymer, and
b) a fifth, interior layer in adherence with said fourth layer, said fifth layer comprising a homogeneous ethylene/alpha-olefin copolymer having a density of less than or equal to 0.92 grams per cubic centimetre.

8. The multilayer film of claim 5 or 6, further including a fourth, interior layer positioned between said second and third layers, said fourth layer comprising at least one material selected from the group consisting of ethylene/vinyl alcohol copolymer, vinylidene chloride copolymer, polyamide, polyvinyl alcohol, polyhydroxyaminoether, and polyalkylene carbonate.

9. A multilayer film, comprising:
a) a first, interior layer comprising a polypropylene homopolymer or copolymer;
b) a second layer in adherence with said first layer, said second layer comprising a homogeneous ethylene/alpha-olefin copolymer having a density of less than or equal to 0.92 grams per cubic centimetre; and
c) a third, exterior layer comprising at least one material selected from the group consisting of polyamide, polypropylene, polyester, cellophane, polycarbonate, polyvinylidene fluoride, and blends thereof, said first layer being positioned between said second and third layers.

10. The multilayer film of claim 9, wherein said third layer is oriented in at least one direction.

11. The multilayer film of claim 9 or 10, further including a fourth, interior layer positioned between said first and third layers, said fourth layer comprising at least one material selected from the group consisting of ethylene/vinyl alcohol copolymer, vinylidene chloride copolymer, polyamide, polyvinyl alcohol, polyhydroxyaminoether, and polyalkylene carbonate.

12. The multilayer film of claim 9, 10 or 11 wherein the density of said homogeneous ethylene/alpha-olefin copolymer is from 0.85 to 0.91 grams per cubic centimetre.

13. The multilayer film of claim 12, wherein the density of said homogeneous ethylene/alpha-olefin copolymer is from 0.89 to 0.91 grams per cubic centimetre.

14. The multilayer film of any one of claims 9 to 13, wherein said second layer consists essentially of a homogeneous ethylene/alphaolefin copolymer having a density of less than or equal to 0.92 grams per cubic centimetre.

15. The multilayer film of any one of claims 9 to 14, wherein said second layer is an interior layer and said multilayer film further includes a fourth, exterior layer such that said second layer is positioned between said first and fourth layers, said fourth layer comprising a polyethylene homopolymer or copolymer.

16. The multilayer film of claim 15, wherein said fourth layer is directly adhered to said second layer.

17. The multilayer film of claim 15 or 16, further including:
a) a fifth, interior layer in adherence with said second layer, said fifth layer comprising a polypropylene homopolymer or copolymer, and
b) a sixth, interior layer in adherence with said fifth layer, said sixth layer comprising a homogeneous ethylene/alpha-olefin copolymer having a density of less than or equal to 0.92 grams per cubic centimetre.

18. The multilayer film of claim 15 or 16, further including a fifth, interior layer positioned between said second and fourth layers, said fifth layer comprising at least one material selected from the group consisting of ethylene/vinyl alcohol copolymer, vinylidene chloride copolymer, polyamide, polyvinyl alcohol, polyhydroxyaminoether, and polyalkylene carbonate.

19. A package made from the multilayer film of any one of the preceding claims.
